# EUROPÄISCHE PATENTSCHRIFT

(11) **EP 3 520 655 B1**
(45) Veröffentlichungstag und Bekanntmachung des Hinweises auf die Patenterteilung: **23.09.2020**
(21) Anmeldenummer: 18213278.7
(22) Anmeldetag: 18.12.2018
(51) Int. Cl.: A47F 10/00, B65G 1/00, A47F 5/10, B27B 31/00, B27M 1/08, B23Q 7/10

(54) **HANDLINGANORDNUNG**
HANDLING ASSEMBLY
DISPOSITIF DE MANUTENTION

(30) Priorität: 21.12.2017 DE 102017131003
(43) Veröffentlichungstag der Anmeldung: 07.08.2019
(60) Teilanmeldung: 20188341.0
(73) Patentinhaber: IMA Schelling Deutschland GmbH, 32312 Lübbecke (DE)
(72) Erfinder: Niebur, Dirk, 32609 Hüllhorst (DE)
(74) Vertreter: Schober, Mirko

(56) Entgegenhaltungen:
- EP-A1- 2 253 422
- EP-A2- 2 527 112
- DE-A1-102013 106 640

## Beschreibung

Die Erfindung betrifft eine Handlinganordnung für plattenförmige Erzeugnisse aus Holz oder Holzersatzstoffen nach dem Oberbegriff des Anspruchs 1.

Bei der Holzverarbeitung müssen plattenförmige Erzeugnisse vor ihrer Bearbeitung und gegebenenfalls auch danach sortiert, abgelegt oder sonst wie gefördert oder bevorratet werden. Nicht selten kommen dabei sogenannte mobile Vorratselemente zum Einsatz, beispielsweise sogenannte Hordenwagen, auf denen einzelne Werkstücke platziert werden. Die mobilen Vorratselemente weisen dazu eine Ablage oder eine Mehrzahl Ablagen auf. In der Regel sind diese mobilen Vorratselemente entsprechend den Anforderungen unterteilt und/oder vorgerüstet.

Zumeist werden für die mobilen Vorratselemente daher standardisierte Einrichtungen verwendet, die eine Vielzahl unterschiedlicher Werkstücke aufnehmen können. Dabei kommt es durchaus vor, dass möglicherweise vorhandene Kapazitäten nicht oder nur unzureichend genutzt werden. Folglich wird die Bestückung der einzelnen mobilen Vorratselemente in der Regel nach einem vorgegebenen Teileplan vorgenommen, um "Leerstellen" in den mobilen Vorratselementen möglichst zu vermeiden. Dies hat wiederum den Nachteil, dass möglicherweise zu einer Kommission gehörende Teile auf unterschiedlichen mobilen Vorratselementen untergebracht werden müssen. Dies ist nachteilig. Folglich kommt es in der Praxis immer wieder vor, dass mobile Vorratselemente nicht optimal ausgelastet sind.

Aufgabe der vorliegenden Erfindung ist es daher, eine Handlinganordnung für plattenförmige Erzeugnisse zur Verfügung zu stellen, bei welcher die geschilderten Nachteile nicht auftreten.

Gelöst wird diese Aufgabe durch eine Handlinganordnung mit den Merkmalen des Anspruchs 1. Vorteilhafte Ausführungsformen finden sich in den Unteransprüchen.

Erfindungsgemäß weist die Handlinganordnung für plattenförmige Erzeugnisse aus Holz oder Holzersatzstoffen dazu folgendes auf:
Eine Handlingvorrichtung mit einer Mehrzahl zur Aufnahme von plattenförmigen Erzeugnissen ausgelegten mobilen Vorratselementen,
eine Mehrzahl plattenförmige Erzeugnisse aus Holz oder Holzersatzstoffen und
eine Maschinensteuerung. Dabei ist vorgesehen, dass jedes mobile Vorratselement wenigstens eine Ablage zur Aufnahme und/oder Ablage von plattenförmigen Erzeugnissen umfasst.

Erfindungsgemäß ist nun die Handlingvorrichtung in der Lage, Ablagen oder Unterteilungen an den mobilen Vorratselementen zu manipulieren. Wenigstens eine Ablage und/oder wenigstens eine Unterteilungseinrichtung wenigstens eines mobilen Vorratselements sind also erfindungsgemäß durch die Handlingvorrichtung manipulierbar ausgebildet. Die Handlingvorrichtung ist dabei nun dazu ausgelegt, die wenigstens eine Ablage und/oder Unterteilungseinrichtung derart zu manipulieren, dass plattenförmige Erzeugnisse nach einem durch die Maschinensteuerung vorgegebenen Teileplan in dem betreffenden Vorratselement Platz finden. Das Rüsten des mobilen Vorratselements erfolgt also erfindungsgemäß bereits durch die Handlingvorrichtung, die jedes mobile Vorratselement dazu individuell nach einem vorgegebenen Teileplan einrichtet bzw. rüstet und dabei Ablagen und/oder Unterteilungen herausnimmt, hereinnimmt, verschiebt usw. Auf diese Weise ist es möglich, bereits vor der Produktion der nach einem Teileplan vorgegebenen Teile entsprechende Ablagemöglichkeiten so zu schaffen, dass der durch die mobilen Vorratselemente zur Verfügung gestellte Raum individuell und bestmöglich genutzt werden kann. So kann auch erreicht werden, dass zusammengehörige Kommissionen von Plattenteilen auf möglichst wenige mobile Vorratselemente verteilt werden.

Nach einer vorteilhaften Ausführungsform kann vorgesehen sein, dass die manipulierbare Ablage und/oder Unterteilungseinrichtung entfernbar und/oder versetzbar und/oder verschwenkbar und/oder verschiebbar ist/sind. Auf diese Weise lassen sich mit Hilfe der Handlingvorrichtung, die bevorzugt einen Handlingroboter umfasst, die mobilen Vorratselemente sehr individuell auf den vorgegebenen Teileplan und die in jedem mobilen Vorratselement laut Teileplan unterzubringenden Teile anpassen und rüsten.

Das oder die mobilen Vorratselemente können dabei als Hordenwagen ausgebildet sein, so dass sie sich auch leicht - auch miteinander gekoppelt - zu Transportzwecken durch den Arbeitsraum bewegen lassen.

Nach einer weiteren Ausführungsform kann vorgesehen sein, dass wenigstens ein Vorratselement eine Erkennungsvorrichtung aufweist, welche die ordnungsgemäße oder nicht ordnungsgemäße Aufnahme eines oder einer Mehrzahl plattenförmiger Erzeugnisse durch das Vorratselement erkennt. Die Erkennungsvorrichtung kann zum Beispiel eine Lichtschranke oder auch eine mechanische Einrichtung sein, die beispielsweise das Verrutschen eines im Vorratselement platzierten Plattenteils anzeigt und der Handlingvorrichtung signalisiert, dass sich ein bestimmtes Teil nicht am vorgesehenen Ort befindet.

Beim Rüsten des Vorratselements durch die Handlingvorrichtung kann es vorkommen, dass einzelne Ablageelemente oder Unterteilungen gar nicht benötigt werden. In einem solchen Fall kann es sich anbieten, dass diese nicht benötigten Elemente trotzdem am Vorratselement verbleiben. Dazu kann insbesondere vorgesehen sein, dass wenigstens ein Vorratselement eine Verstaueinrichtung zur Aufnahme nicht benötigter Ablagen und/oder Unterteilungseinrichtungen umfasst. Diese Vorratselemente sind dann in der Lage, entsprechend nicht benötigte Teile zu befestigen oder an ihnen einzuhängen, sodass das Vorratselement auch in Ausgestaltung als Hordenwagen in dieser Konfiguration transportiert werden kann. Dies umfasst auch die Möglichkeit, vorhandene Ablagen und/oder Unterteilungseinrichtungen aus einer Gebrauchslage in eine Verstaulage zu verschwenken. Dazu sind die Ablagen und/oder Unterteilungseinrichtungen dann schwenkbar an dem Vorratselement angeordnet.

Nach einer besonderen Ausführungsform der vorliegenden Erfindung umfasst die erfindungsgemäße Handlinganordnung weiter eine Regalvorrichtung, die eine Mehrzahl Aufnahmeplätze zur Aufnahme von Vorratselementen aufweist. Auf diese Weise ist es möglich, dass die Handlingvorrichtung die einzelnen Vorratselemente auf geringem Raum rüsten und mit Platten bestücken kann.

Insbesondere kann hierbei vorgesehen sein, dass jeder Aufnahmeplatz eine Positioniereinrichtung und jedes Vorratselement eine dazu passende Positionierhilfe aufweist. Dabei wirken die Positioniereinrichtung und die Positionierhilfe so zusammen, dass jedes Vorratselement in einer definierten Lage am Aufnahmeplatz angeordnet ist. Auf diese Weise wird sichergestellt, dass dann das Rüsten und Bestücken der Vorratselemente durch die Handlingvorrichtung fehlerfrei und positionsgenau erfolgen kann.

Bei der Benutzung der Vorratselemente kann es vorkommen, dass diese angehoben werden müssen. Dies kann natürlich durch die Handlingvorrichtung geschehen, beispielsweise aber auch durch Manipulation mit einem Stapler. Folglich ist nach einer weiteren Ausführungsform der vorliegenden Erfindung vorgesehen, dass wenigstens ein Vorratselement einen Sockel - insbesondere mit wenigstens einer Aufnahme umfasst - wobei der Sockel zum Angreifen eines Hubstaplers ausgelegt ist.

Die oben beschriebene Handlinganordnung kann auch dadurch verbessert werden, dass man ein Identifizierungssystem schafft. Ein solches Identifizierungssystem lässt sich auf unterschiedliche Weise einsetzen. So können beispielsweise der Beladezustand und Rüstzustand der Vorratselemente erfasst und ausgewertet werden. Auch kann beispielsweise über Nachverfolgungseinrichtungen wie RFID-Chips, Barcodes, QR-Codes oder dergleichen, die insbesondere an den Vorratselementen angebracht sind und über ein Scan- bzw. Erfassungssystem des Identifizierungssystems erfasst werden können, bestimmt werden, an welcher Stelle sich ein bestimmtes Vorratselement gerade befindet. Dies umfasst insbesondere auch Informationen darüber, an welcher Stelle im Regal einer Handlinganordnung ein entsprechendes Vorratselement angeordnet ist, wie es bestückt ist und welche Ablagen und/oder Unterteilungseinrichtungen gerade in dem betreffenden Vorratselement vorhanden sind. Nach einer erfindungsgemäßen Ausführungsform ist deshalb vorgesehen, dass die Handlinganordnung eine Identifizierungseinrichtung umfasst, welche dazu ausgelegt ist, unterschiedliche Vorratselemente hinsichtlich ihrer Bestückung mit Werkstücken und/oder ihres Rüstzustands, insbesondere des Vorhandenseins oder der Position von Ablagen und/oder Unterteilungseinrichtungen, zu identifizieren.

Die Erfindung wird nachfolgend anhand der Figuren 1 bis 6 näher erläutert.
Figur 1 zeigt ein Vorratselement einer erfindungsgemäßen Handlinganordnung in perspektivischer Ansicht in einer ersten Rüstkonfiguration.
Figur 2 zeigt ein Vorratselement einer erfindungsgemäßen Handlinganordnung in perspektivischer Ansicht in einer zweiten Rüstkonfiguration.
Figur 3 zeigt ein Vorratselement einer erfindungsgemäßen Handlinganordnung in perspektivischer Ansicht in einer dritten Rüstkonfiguration.
Figur 4 zeigt ein Vorratselement einer erfindungsgemäßen Handlinganordnung in perspektivischer Ansicht in einer vierten Rüstkonfiguration.
Figur 5 zeigt in seitlicher Ansicht eine Regalvorrichtung, in welche eine Mehrzahl Vorratselemente aufgenommen ist.
Figur 6 zeigt eine erfindungsgemäße Handlinganordnung in seitlicher Ansicht.

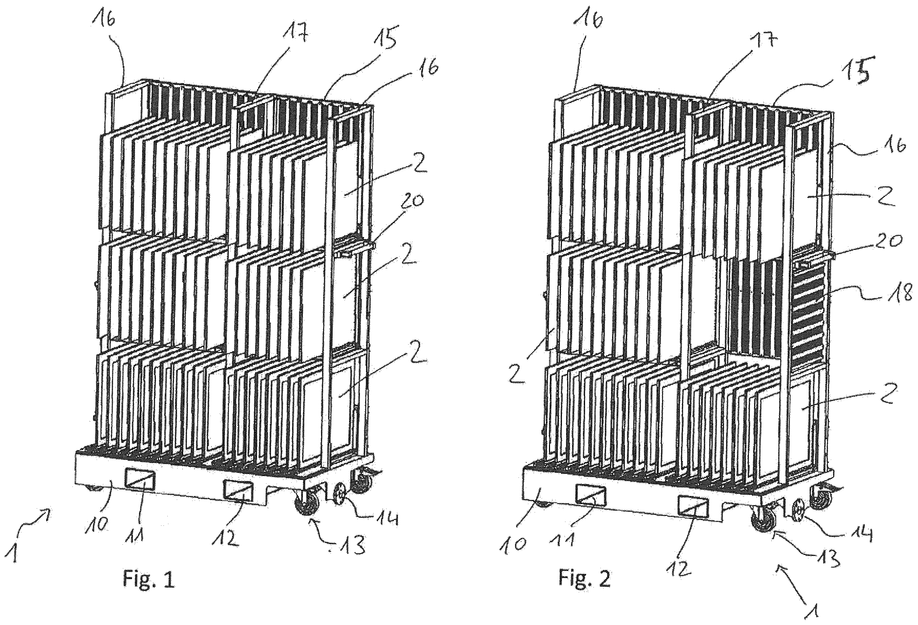

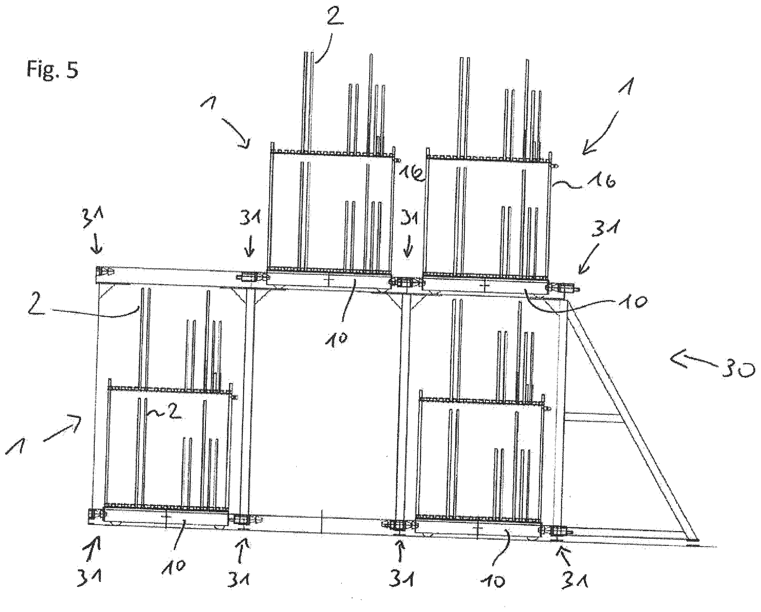

Das in den Figuren 1 bis 4 gezeigte Vorratselement 1 ist bevorzugt als Hordenwagen mit Laufrollen 13 ausgebildet, die an einem Sockel 10 angebracht sind, wobei die folgende Beschreibung nicht zwingend voraussetzt, dass das mobile Vorratselement 1 als Wagen ausgebildet sein muss. Folglich offenbart die weitere Beschreibung ausdrücklich auch ein Vorratselement 1 ohne Rollen. Der Sockel 10 kann zusätzlich oder ergänzend zu den Rollen 13 Aussparungen 11, 12 aufweisen, die etwa zum Einbringen der Gabel eines Hubstaplers geeignet sind. Auf diese Weise lässt sich das Vorratselement 1 anheben und beispielsweise auf einem Regal abstellen (vergleiche Figur 5).

Weiter weist das Vorratselement 1 Ablageböden auf, auf denen plattenförmige Werkstücke 2 abgestellt werden können. Zudem gibt es am Vorratselement 1 vertikale Unterteilungen, die als Seitenwände 16 oder Zwischenwände 17 ausgebildet sein können. Ferner ist eine Rückwand 15 vorgesehen. Die Ablagen, Unterteilungen und/oder die Rückwand können zur Schonung der darauf abgelegten Werkstücke mit Bürsten (zum Beispiel angedeutet durch die schwarzen Streifen in den Figuren 1 bis 4) beschichtet sein.

In Figur 1 weist das Vorratselement 1 vertikale Unterteilungen 16, 17, eine Rückwand und eine Reihe von hier nicht dargestellten Ablagen auf, auf denen die Werkstücke angebracht sind. Auch der Sockel 10 bildet im gezeigten Beispiel eine Ablage für Werkstücke 2. Erfindungsgemäß ist es nun möglich, über eine Handlingvorrichtung (zum Beispiel einen Handlingroboter) das Vorratselement 13 in Abhängigkeit eines vorgesehenen Teileplans zu rüsten. Rüsten bedeutet hier, dass abhängig von der zu erwartenden Teilegröße Unterteilungen 16, 17 sowie Ablagen 18, 19 individuell durch die Handlingvorrichtung positioniert werden. Das Positionieren kann entweder im konkreten Anordnen der genannten Bauteile am Vorratselement 1 bestehen, kann aber auch darin bestehen, dass entsprechende Bauteile weggeschwenkt, entfernt oder versetzt werden. Im Beispiel der Figur 2 ist beispielsweise ein Ablageboden 18 aus seiner horizontalen Anordnung entfernt worden und an einer Verstaueinrichtung 20 eingehängt. Auf diese Weise bleibt das nicht verwendete Teil 18 am Vorratselement 1 vorhanden und steht für einen weiteren Rüstvorgang zur Verfügung.

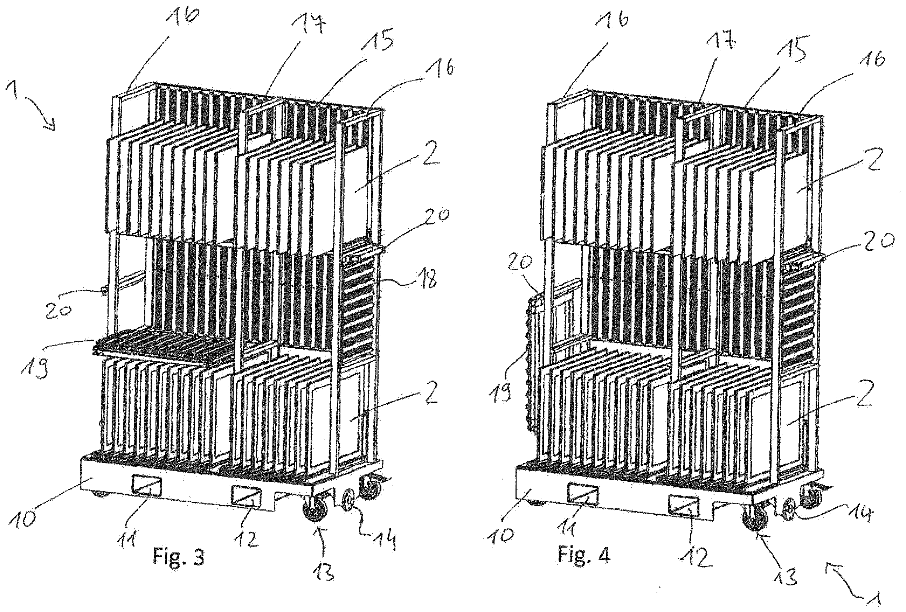

In Figur 3 ist gegenüber Figur 2 ein weiteres Ablagefach leergeräumt, sodass hier der Ablageboden 19 zu erkennen ist. Dieser Ablageboden 19 lässt sich im Wege des Rüstvorganges beispielsweise ebenfalls entfernen, und an einer weiteren Verstaueinrichtung 20 einhängen oder dorthin verschwenken. Diese Situation ist in Figur 4 dargestellt.

Das Vorratselement 1 kann bevorzugt auch eine Positionierhilfe 14 umfassen, die wie im gezeigten Beispiel der Figuren 1 bis 4 als Vertiefung oder Aussparung oder Aufnahme ausgebildet ist. Eine solche Aufnahme kann insbesondere innen konisch zulaufend ausgebildet sein, sodass sie zusätzlich eine Zentrierfunktion aufweist. Ebenso kann das Gegenstück, eine am Aufstellungsort des Vorratselements 1 vorgesehene Positioniereinrichtung 31 (vergleiche Figur 5), entsprechend konisch geformt sein, etwa als Bolzen ausgebildet sein, sodass es in die Positionierhilfe 14 aufgenommen werden kann. Diese Positionierhilfe 14 dient einer definierten Ausrichtung des Vorratselements 1, sodass es beispielsweise durch eine Handlingvorrichtung erkannt und ordnungsgemäß beschickt oder gerüstet werden kann.

In Figur 5 ist ein Teil einer erfindungsgemäßen Handlinganordnung gezeigt. Es handelt sich dabei um ein Regal 30, welches im gezeigten Beispiel zwei Etagen aufweist, allerdings auch mehr oder weniger Etagen aufweisen kann. Das Regal 30 kann eine Mehrzahl Vorratselemente 1 aufnehmen. An jedem Ablageplatz des Regals 30 sind dann einseitig oder beidseitig des Vorratselements 1 Positioniereinrichtungen 31 vorgesehen, die nach Ablage des Vorratselements 1 auf einem Ablageplatz in Eingriff mit den am Vorratselement 1 vorgesehenen Positionierhilfen 14 gebracht werden können. Im gezeigten Beispiel weisen die Positionierhilfen 14 Aussparungen auf, die Positioniereinrichtungen 31 sind beispielsweise in Richtung des Vorratselements 1 konisch zulaufende Bolzen, die in der Zeichnung der Figur 5 zur Arretierung und Positionierung des Vorratselements 1 im Regal 30 in horizontaler Richtung verschoben werden können. Natürlich sind auch andere Arten von Positioniereinrichtungen (z. B. Haken, Schrägflächen usw.) denkbar. Wichtig ist, dass beim Zusammenwirken der Positioniereinrichtungen 31 mit den entsprechenden Positionierhilfen 14 eine definierte Positionierung des Vorratselements 1 erzielt wird, sodass eine nicht gezeigte Maschinensteuerung, die eine Handlingvorrichtung steuert, über Informationen über die genauen Positionen der einzelnen Vorratselemente 1 und der darin abgelegten Teile 2 verfügt.

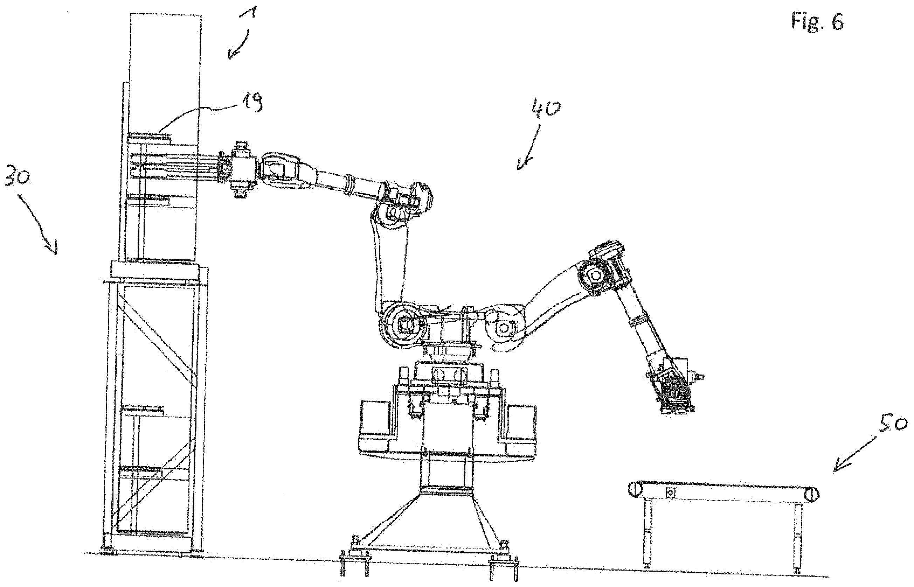

In Figur 6 ist schließlich in Seitenansicht eine erfindungsgemäße Ausführungsform einer Handlinganordnung gezeigt. Diese umfasst im vorliegenden Fall das Regal 30, einen Handlingroboter 40 sowie eine weitere Ablagefläche 50 auf der dem Regal gegenüberliegenden Seite des Handlingroboters 40. Der Handlingroboter 40 kann Vorratselemente 1 wie oben beschrieben rüsten und sodann plattenförmige Werkstücke (in dieser Abbildung nicht gezeigt) von der Ablage 50 nehmen und in ein entsprechendes Vorratselement 1 entsprechend einem vorgegebenen Teileplan einsortieren oder aber entsprechende Teile aus dem Vorratselement 1 entnehmen und auf der Ablage 50 ablegen.

Mit der vorliegenden Erfindung wird eine Handlinganordnung bereitgestellt, die in der Lage ist, Werkstücke wesentlich effektiver in - insbesondere als Hordenwagen ausgebildeten - mobilen Vorratselementen 1 unterzubringen. Dies wird dadurch erreicht, dass abhängig von einem vorgegebenen Teileplan zunächst durch die Handlingvorrichtung, insbesondere den Handlingroboter, eine Rüstung der entsprechenden mobilen Vorratselemente 1 erfolgt, indem Ablagen oder Unterteilungselemente entsprechend positioniert, entfernt, hinzugefügt, verschwenkt usw. werden. Auf diese Weise entstehen Vorratselemente 1, die im Arbeitsprozess eine optimierte Unterbringung von Werkstücken ermöglichen. Auf diese Weise können nicht nur Leerräume minimiert werden, sondern es können auch zusammengehörende Teilekommissionen auf ein Minimum von Vorratselementen verteilt werden.

## Patentansprüche

1. Handlinganordnung für plattenförmige Erzeugnisse (2) aus Holz oder Holzersatzstoffen,
mit einer Handlingvorrichtung,
einer Mehrzahl zur Aufnahme von plattenförmigen Erzeugnissen (2) ausgelegten mobilen Vorratselementen (1),
einer Mehrzahl plattenförmiger Erzeugnisse (2) aus Holz oder Holzersatzstoffen,
einer Maschinensteuerung,
wobei jedes mobile Vorratselement (1) wenigstens eine Ablage (18, 19) zur Aufnahme und/oder Ablage von plattenförmigen Erzeugnissen umfasst,
**dadurch gekennzeichnet,**
**dass** wenigstens eine Ablage (18, 19) und/oder wenigstens eine Unterteilungseinrichtung (16, 17) wenigstens eines mobilen Vorratselements (1) durch die Handlingvorrichtung manipulierbar ausgebildet ist und die Handlingvorrichtung dazu ausgelegt ist, die wenigstens eine Ablage (18, 19) und/oder Unterteilungseinrichtung (16, 17) derart zu manipulieren, dass plattenförmige Erzeugnisse (2) nach einem durch die Maschinensteuerung vorgegebenen Teileplan in dem betreffenden Vorratselement (1) Platz finden.

2. Handlinganordnung nach Anspruch 1,
**dadurch gekennzeichnet,**
**dass** die manipulierbare Ablage (18, 19) und/oder Unterteilungseinrichtung (16, 17) entfernbar und/oder versetzbar und/oder verschwenkbar und/oder verschiebbar ist/sind.

3. Handlinganordnung nach einem der vorigen Ansprüche,
**dadurch gekennzeichnet,**
**dass** die Handlingvorrichtung einen Handlingroboter umfasst.

4. Handlinganordnung nach einem der vorigen Ansprüche,
**dadurch gekennzeichnet,**
**dass** wenigstens ein Vorratselement (1) als Hordenwagen ausgebildet ist.

5. Handlinganordnung nach einem der vorigen Ansprüche,
**dadurch gekennzeichnet,**
**dass** die Vorratselemente (1) miteinander koppelbar sind.

6. Handlinganordnung nach einem der vorigen Ansprüche,
**dadurch gekennzeichnet,**
**dass** wenigstens ein Vorratselement (1) eine Erkennungsvorrichtung aufweist, welche die ordnungsgemäße oder nicht ordnungsgemäße Aufnahme eines oder einer Mehrzahl plattenförmiger Erzeugnisse (2) durch das Vorratselement (1) erkennt.

7. Handlinganordnung nach einem der vorigen Ansprüche,
**dadurch gekennzeichnet,**
**dass** wenigstens ein Vorratselement (1) eine Verstaueinrichtung (20) zur Aufnahme nicht benötigter Ablagen (18, 19) und/oder Unterteilungseinrichtungen (16, 17) umfasst.

8. Handlinganordnung nach einem der vorigen Ansprüche,
**dadurch gekennzeichnet,**
**dass** sie weiter eine Regalvorrichtung umfasst, die eine Mehrzahl Aufnahmeplätze zur Aufnahme von Vorratselementen (1) aufweist.

9. Handlinganordnung nach Anspruch 8,
**dadurch gekennzeichnet,**
**dass** jeder Aufnahmeplatz eine Positioniereinrichtung (31) und jedes Vorratselement eine dazu passende Positionierhilfe (14) aufweist, wobei die Positioniereinrichtung und die Positionierhilfe (14) so zusammenwirken, dass jedes Vorratselement (1) in einer definierten Lage am Aufnahmeplatz angeordnet ist.

10. Handlinganordnung nach einem der vorigen Ansprüche,
**dadurch gekennzeichnet,**
**dass** wenigstens ein Vorratselement (1) einen Sockel (10), insbesondere mit wenigstens einer Aufnahme (11, 12) umfasst, wobei der Sockel (10) zum Angreifen eines Hubstaplers ausgelegt ist.

11. Handlinganordnung nach einem der vorigen Ansprüche,
**dadurch gekennzeichnet,**
**dass** sie eine Identifizierungseinrichtung, welche dazu ausgelegt ist, unterschiedliche Vorratselemente (1) hinsichtlich ihrer Bestückung mit Werkstücken (2) und/ oder ihres Rüstzustands, insbesondere des Vorhandenseins oder der Position von Ablagen (18, 19) und/oder Unterteilungseinrichtungen (16, 17), zu identifizieren.

## Claims

1. Handling assembly for plate-type products (2) of wood or wood substitutes, with a handling device, a plurality of mobile supply elements (1) set up to receive plate-type products (2), a plurality of plate-type products (2) of wood or wood substitutes, a machine control, wherein each mobile supply element (1) has at least one shelf (18, 19) for receiving and/or depositing plate-type products, **characterised in that** at least one shelf (18, 19) and/or at least one sub-division apparatus (16, 17) of at least one mobile supply element (1) is configured so that it can be manipulated by the handling device, and the handling device is designed to manipulate the at least one shelf (18, 19) and/or sub-division apparatus (16, 17) so that plate-type products are placed in the respective supply element (1) according to an item plan produced by the machine control.

2. Handling assembly according to claim 1, **characterised in that** the manipulable shelf (18, 19) and/or sub-division apparatus (16, 17) is/are removable and/or displaceable and/or pivotable and/or slidable.

3. Handling assembly according to one of the preceding claims, **characterised in that** the handling device comprises a handling robot.

4. Handling assembly according to one of the preceding claims **characterised in that** at least one supply element (1) is configured as a trolley.

5. Handling assembly according to one of the preceding claims, **characterised in that** the supply elements (1) can be coupled to one another.

6. Handling assembly according to one of the preceding claims **characterised in that** at least one supply element (1) has a recognition device which recognizes the proper or improper receiving of one or a plurality of plate-type products (2) by the supply element (1).

7. Handling assembly according to one of the preceding claims **characterised in that** at least one supply element (1) comprises a storage device (20) for receiving the shelves (18, 19) and/or sub-division apparatuses (16, 17) which are not required.

8. Handling assembly according to one of the preceding claims **characterised in that** it further comprises a racking unit which has a plurality of reception spaces for receiving supply elements (1).

9. Handling assembly according to claim 8 **characterised in that** each reception place has a positioning device (31) and each supply element has a positioning aid (14) adapted thereto, wherein the positioning device and the positioning aid (14) interact with one another so that each supply element (1) is arranged in a defined position on the reception place.

10. Handling assembly according to one of the preceding claims **characterised in that** at least one supply element (1) has a base plinth (10), in particular with at least one socket (11, 12) wherein the base plinth (0) is configured to engage a fork-lift truck.

11. Handling assembly according to one of the preceding claims **characterised in that** it has an identification unit which is designed to identify different supply elements (1) as regards their provision with workpieces (20) and/or their setup state, in particular as regards the presence or the position of shelves (18, 19) and/or sub-division apparatuses (16, 17).

## Revendications

1. **Dispositif** de manutention pour produits en forme de plaques (2) en bois ou en matière de remplacement du bois, avec
un dispositif de manutention,
une pluralité d'éléments de stockage (1) mobiles, qui sont conçus pour la réception de produits en forme de plaques (2),
une pluralité de produits en forme de plaques (2) en bois ou en matière de remplacement du bois,
une commande de machine,
sachant que chaque élément de stockage (1) comprend au moins un plateau (18, 19) pour la réception et / ou le rangement de produits en forme de plaques,
**caractérisé en ce que**
au moins un plateau (18, 19) et / ou au moins un dispositif de partitionnement (16, 17) d'au moins un élément de stockage (1) mobile est conçu de sorte à pouvoir être manipulé par le dispositif de manutention et que le dispositif de manutention est conçu pour manipuler l'au moins un plateau (18, 19) et / ou dispositif de partitionnement (16, 17) de sorte que les produits en forme de plaques (2) soient placés dans l'élément de stockage (1) concerné, conformément à un plan de répartition prédéterminé par la commande de la machine.

2. Dispositif de manutention selon la revendication 1, **caractérisé en ce que**
**le plateau** (18, 19) manipulable et / ou le dispositif de partitionnement (16, 17) est / sont amovible/s et / ou déplaçables et / ou pivotable/s et / ou coulissants.

3. Dispositif de manutention selon l'une des revendications précédentes,
**caractérisé en ce que**
le dispositif de manutention comprend un robot de manutention.

4. Dispositif de manutention selon l'une des revendications précédentes,
**caractérisé en ce que**
au moins un élément de stockage (1) est réalisé en tant que chariot à étagères.

5. Dispositif de manutention selon l'une des revendications précédentes,
**caractérisé en ce que**
les éléments de stockage (1) peuvent être couplés ensemble.

6. Dispositif de manutention selon l'une des revendications précédentes,
**caractérisé en ce que**
au moins un élément de stockage (1) présente un dispositif de détection, qui détecte la réception correcte ou incorrecte d'un ou de plusieurs produits en forme de plaques (2) par l'élément de stockage (1).

7. Dispositif de manutention selon l'une des revendications précédentes,
**caractérisé en ce que**
l'un des éléments de stockage (1) au moins comprend un dispositif de rangement (20) pour la réception de plateaux (18, 19) et / ou de dispositifs de partitionnement (16, 17) non utilisés.

8. Dispositif de manutention selon l'une des revendications précédentes,
**caractérisé en ce que**
celui-ci comprend en outre un dispositif de rayonnage, qui présente une pluralité d'emplacements de réception destinés à recevoir des éléments de stockage (1).

9. Dispositif de manutention selon la revendication 8,
**caractérisé en ce que**
chaque emplacement de réception présente un dispositif de positionnement (31) et chaque élément de stockage un auxiliaire de positionnement (14) approprié, sachant que le dispositif de positionnement et l'auxiliaire de positionnement (14) coopèrent de sorte que chaque élément de stockage (1) soit disposé dans une position définie au lieu de réception.

10. Dispositif de manutention selon l'une des revendications précédentes,
**caractérisé en ce que**
au moins un élément de stockage (1) comprend un socle (10), en particulier avec au moins un réceptacle (11, 12), sachant que le socle (10) est conçu pour saisir un chariot élévateur.

11. Dispositif de manutention selon l'une des revendications précédentes,
**caractérisé en ce que**
celui-ci comprend un dispositif d'identification, lequel est conçu pour identifier différents éléments de stockage (1) en ce qui concerne leur chargement en plaques (2) et / ou leur équipement, en particulier la présence ou la position de plateaux (18, 19) et / ou de dispositifs de partitionnement (16, 17).
